# EUROPÄISCHE PATENTANMELDUNG

(11) **EP 4 530 675 A2**
(43) Veröffentlichungstag der Anmeldung: **02.04.2025**
(21) Anmeldenummer: 25152155.5
(22) Anmeldetag: 30.11.2023
(51) Int. Cl.: G01S 15/931

(54) **VERFAHREN ZUR ERMITTLUNG EINER DREIDIMENSIONALEN LAGE EINES REFLEXIONSPUNKTES EINES OBJEKTES IN DER UMGEBUNG EINES FAHRZEUGS MITTELS EINES ULTRASCHALLSENSORS, COMPUTERPROGRAMM, RECHENVORRICHTUNG UND FAHRZEUG**

(30) Priorität: 20.12.2022 DE 102022214079
(62) Teilanmeldung aus: 23213246.4
(71) Anmelder: Robert Bosch GmbH, 70442 Stuttgart (DE)
(72) Erfinder: Reimann, Tom, 73266 Bissingen An Der Teck (DE); Olbrich, Sebastian, 74189 Weinsberg (DE); Pfeiffer, Timo, 71522 Backnang (DE); Schmid, Dirk, 75397 Simmozheim (DE)

(57) **Zusammenfassung**

Verfahren zur Ermittlung einer dreidimensionalen Lage eines Reflexionspunktes (500) eines Objektes in der Umgebung eines Fahrzeugs (200) mittels eines Ultraschallsensors (100), welcher wenigstens drei Sensorelemente (110 bis 140) aufweist, wobei wenigstens zwei Sensorelemente zueinander horizontal und wenigstens zwei Sensorelemente zueinander vertikal versetzt angeordnet sind, wobei das Verfahren folgende Schritte umfasst: Aussendung (640) mindestens zweier Ultraschallsignale mittels wenigstens einem der Sensorelemente (110 bis 140) des Ultraschallsensors (100), wobei die zwei Ultraschallsignale zeitlich nacheinander ausgesendet werden, und, wobei die zwei Ultraschallsignale in unterschiedliche Raumrichtungen (211, 221) und/oder mit jeweils unterschiedlich ausgeformten Schallkegeln und/oder mit jeweils unterschiedlichen Ultraschallfrequenzen ausgesendet werden; Erfassung (650) der zwei ausgesendeten und jeweils an einem Objekt reflektierten Ultraschallsignale als Reflexionssignale jeweils mittels der wenigstens drei Ultraschallsensorelemente; und Ermittlung (660) der dreidimensionalen Lage eines Reflexionspunktes (500) des Objektes relativ zum Ultraschallsensor (100) oder zum Fahrzeug (200) basierend auf wenigstens drei erfassten Reflexionssignalen.

## Beschreibung

Die vorliegende Erfindung betrifft ein Verfahren zur Ermittlung einer dreidimensionalen Lage eines Reflexionspunktes eines Objektes in der Umgebung eines Fahrzeugs mittels eines Ultraschallsensors. Die Erfindung betrifft auch ein Computerprogramm, umfassend Befehle, die bei der Ausführung des Programms durch einen Computer diesen veranlassen, die Schritte des erfindungsgemäßen Verfahrens auszuführen. Die Erfindung betrifft des Weiteren eine Rechenvorrichtung, umfassend eine Recheneinheit, die so konfiguriert ist, dass sie die Schritte des erfindungsgemäßen Verfahrens ausführt. Darüber hinaus betrifft die Erfindung ein Fahrzeug, umfassend wenigstens diese erfindungsgemäße Rechenvorrichtung.

Das Dokument DE 10 2019 214 612 A1 offenbart ein Verfahren zum Erkennen eines Objekts in einer Umgebung eines Fahrzeugs, wobei das Fahrzeug einen die Umgebung des Fahrzeugs überwachenden Ultraschallsensor zum Aussenden und Empfangen von Ultraschallsignalen aufweist.

Das Dokument DE 10 2020 211 538 A1 offenbart ein mikromechanisches Bauteil für eine Schallwandlervorrichtung. Die Schrift US 10,605,903 B2 offenbart einen Ultraschallwandler zur Erfassung von Ultraschallsignalen.

Die Schrift DE 10 2009 032 541 A1 offenbart ein Verfahren mit wenigstens einem Sensor eines Fahrerassistenzsystems, wobei eine relative Lage eines außerhalb des Fahrzeugs befindlichen Objekts bezüglich des Sensors erfasst wird und anhand der erfassten Lage und anhand eines Modells für zumindest eine Kontur einer Außenfläche des Fahrzeugs ein Abstand des Objekts zu dem Fahrzeug ermittelt wird, wobei bei dem Modell eine dreidimensionale Form der Außenfläche nachgebildet ist.

Das Dokument DE 10 2020 213 673 A1 offenbart Verfahren zur Warnung wenigstens eines Insassen eines ersten Fahrzeugs vor einer Kollisionsgefahr durch eine Fahrzeugtüröffnung.

Die Aufgabe der vorliegenden Erfindung ist es, eine Objekterkennung mittels Ultraschallsensorik zu verbessern.

### Offenbarung der Erfindung

Die vorstehende Aufgabe wird erfindungsgemäß entsprechend der unabhängigen Ansprüche 1 und 7 bis 9 gelöst.

Die vorliegende Erfindung betrifft ein Verfahren zur Ermittlung einer dreidimensionalen Lage eines Reflexionspunktes eines Objektes in der Umgebung eines Fahrzeugs mittels eines Ultraschallsensors. Der Ultraschallsensors umfasst wenigstens drei Sensorelemente, welche insbesondere in einer gemeinsamen Ebene angeordnet sind, wobei wenigstens zwei Sensorelemente zueinander horizontal und wenigstens zwei Sensorelemente zueinander vertikal versetzt angeordnet sind. Die Sensorelemente sind vorzugsweise MEMS-Sensorelemente. Das Verfahren umfasst eine Aussendung mindestens zweier Ultraschallsignale mittels wenigstens eines der Ultraschallsensorelemente des Ultraschallsensors, wobei die zwei Ultraschallsignale zeitlich nacheinander ausgesendet werden, und, wobei die zwei Ultraschallsignale in unterschiedliche Raumrichtungen und/oder mit jeweils unterschiedlich ausgeformten Schallkegeln und/oder mit jeweils unterschiedlichen Ultraschallfrequenzen ausgesendet werden. Anschließend werden die zwei ausgesendeten und an einem Objekt reflektierten Ultraschallsignale als Reflexionssignale jeweils mittels der wenigstens drei Ultraschallsensorelemente erfasst. Danach wird eine dreidimensionale Lage eines Reflexionspunktes des Objektes relativ zum Ultraschallsensor oder zum Fahrzeug basierend auf wenigstens drei, vorzugsweise sechs, erfassten Reflexionssignalen ermittelt, wobei insbesondere eine horizontale Position und eine vertikale Höhe des Reflexionspunktes ermittelt beziehungsweise bestimmt werden. Dabei wird die dreidimensionale Lage des Reflexionspunktes des Objektes in Abhängigkeit von drei Reflexionssignalen ermittelt, welche von einem oder beiden der zwei ausgesendeten Ultraschallsignale stammen beziehungsweise diesen zugeordnet sind. Die Ermittlung der dreidimensionalen Lage des Reflexionspunktes wird insbesondere durch ein Trilaterationsverfahren in Abhängigkeit der bestimmten Laufwegunterschiede und/oder der bestimmten Phasenunterschiede zwischen dem jeweils ausgesendeten Ultraschallsignal und den jeweils zugehörigen an den wenigstens drei Ultraschallsensorelementen erfassten Reflexionssignalen ermittelt. Alternativ kann es vorteilhafterweise vorgesehen sein, dass die Ermittlung der dreidimensionalen Lage des Reflexionspunktes basierend auf drei Reflexionssignalen durchgeführt wird, wobei wenigstens zwei Reflexionssignale von unterschiedlichen Ultraschallsignalen stammen. Durch das Verfahren resultiert der Vorteil, dass die dreidimensionalen Lagen von Reflexionspunkten gegenüber herkömmlichen Verfahren genauer und für einen größeren Winkelbereich in der Umgebung des Fahrzeugs ermittelt werden können. Durch die genauer ermittelte Lage der Reflexionspunkte können beispielsweise Abstände zu Objekten oder Parkplätze genauer und zuverlässiger bestimmt beziehungsweise erkannt werden.

Vorzugsweise erfolgt die Aussendung der mindestens zwei Ultraschallsignale mittels unterschiedlicher Ultraschallsensorelemente des Ultraschallsensors. Dadurch wird vorteilhafterweise eine effiziente und schnell aufeinanderfolgende Aussendung der zwei Ultraschallsignale in unterschiedliche Raumrichtungen und/oder mit jeweils unterschiedlich ausgeformten Schallkegeln und/oder mit jeweils unterschiedlichen Ultraschallfrequenzen ermöglicht.

In einer Ausführung der Erfindung kann es vorgesehen sein, dass die Aussendung wenigstens eines Ultraschallsignals mittels mindestens zwei gleichzeitig aktivierter unterschiedlicher Ultraschallsensorelemente des Ultraschallsensors erfolgt, wobei vorteilhafterweise der Schallkegel des ausgesendeten Ultraschallsignals geformt wird. Somit entsteht der Vorteil, dass der Schallkegel stärker geformt und die Signalamplitude verstärkt werden kann.

In einer Ausgestaltung der Erfindung wird vor der Aussendung der mindestens zwei Ultraschallsignale eine Erkennung einer aktuellen Fahrsituation des Fahrzeugs in Abhängigkeit der Position des Fahrzeugs, in Abhängigkeit einer erfassten Geschwindigkeit des Fahrzeugs, in Abhängigkeit einer Eingabe des Nutzers des Fahrzeugs und/oder in Abhängigkeit eines erfassten Kamerabildes von der Umgebung des Fahrzeugs und/oder in Abhängigkeit von Kartendaten durchgeführt. Das Verfahren wird anschließend mit der Aussendung der mindestens zwei Ultraschallsignale in Abhängigkeit der erkannten Fahrsituation durchgeführt beziehungsweise fortgesetzt, insbesondere wenn als Fahrsituation eine Manöversituation, ein Einparkvorgang oder ein Ausparkvorgang erkannt wurde. Die Manöversituation, der Einparkvorgang oder der Ausparkvorgang wird vorteilhafterweise als aktuelle Fahrsituation des Fahrzeugs erkannt, wenn die erfasste Position des Fahrzeugs in einem Parkbereich liegt, beispielsweise auf einem in Kartendaten markierten Parkplatz, und/oder die erfasste Geschwindigkeit des Fahrzeugs kleiner oder gleich einem Geschwindigkeitsschwellenwert ist und/oder in der Vergangenheit an dieser Position diese Fahrsituation erkannt beziehungsweise ermittelt beziehungsweise beobachtet wurde.

In einer weiteren Ausführung der Erfindung wird vor der Aussendung der mindestens zwei Ultraschallsignale eine Geschwindigkeit des Fahrzeugs erfasst. Anschließend wird eines der Ultraschallsignale in Abhängigkeit der erfassten Geschwindigkeit ausgesendet, wobei die Raumrichtung, die Formung des Schallkegels und/oder die Ultraschallfrequenz des Ultraschallsignals in Abhängigkeit der Geschwindigkeit angepasst wird. Vorteilhafterweise weist das ausgesendete Ultraschallsignal im Stillstand des Fahrzeugs einen in Horizontalrichtung breiteren Schallkegel auf als während der Fahrt des Fahrzeugs. Alternativ oder zusätzlich wird der zeitliche Abstand zwischen den ausgesendeten Ultraschallsignalen in Abhängigkeit der erfassten Geschwindigkeit geändert beziehungsweise angepasst, wobei der zeitliche Abstand zwischen den ausgesendeten Ultraschallsignalen insbesondere mit zunehmender Geschwindigkeit reduziert wird. Durch diese Ausführung des Verfahrens resultiert der Vorteil, dass die dreidimensionalen Lagen von Reflexionspunkten auch während der Fahrt bei höheren Geschwindigkeiten mit höherer Genauigkeit ermittelt werden können.

In einer besonders bevorzugten Ausgestaltung der Erfindung wird ein Objekt in der Umgebung des Fahrzeugs in Abhängigkeit einer Vielzahl von ermittelten dreidimensionalen Lagen von jeweils unterschiedlichen Reflexionspunkten durch ein angelerntes maschinelles Erkennungsverfahren erkannt, insbesondere durch ein neuronales Netz. Vorteilhafterweise wird den ermittelten dreidimensionalen Lagen der jeweils unterschiedlichen Reflexionspunkte das erkannte Objekt zugeordnet. Es kann vorgesehen sein, dass das Objekt alternativ oder zusätzlich in Abhängigkeit wenigstens eines mittels einer Fahrzeugkamera erfassten Kamerabildes oder in Abhängigkeit einer Abfolge von erfassten Kamerabildern ermittelt wird.

In einer Weiterführung der bevorzugten Ausgestaltung wird eine Position und/oder eine Orientierung des erkannten Objektes in der Umgebung des Fahrzeugs abgeschätzt, insbesondere jeweils relativ zum Fahrzeug. Die Abschätzung erfolgt in Abhängigkeit einer Hauptaxialrichtung. Die Hauptaxialrichtung wird vorteilhafterweise in Abhängigkeit der ermittelten dreidimensionalen Lagen der dem Objekt zugeordneten Reflexionspunkte ermittelt. Dabei kann die Ermittlung der Hauptaxialrichtung insbesondere in Abhängigkeit des kleinsten mittleren Abstands der dem Objekt zugeordneten Reflexionspunkte zur Achse erfolgen. Alternativ oder zusätzlich wird die Ermittlung der Hauptaxialrichtung in Abhängigkeit einer Lage einer dreidimensionalen Objektbox um das erkannte Objekt durchgeführt, wobei die Form der Objektbox insbesondere aus einem Speicher basierend auf dem erkannten Objekt geladen und in Abhängigkeit der ermittelten dreidimensionalen Lagen der Reflexionspunkte parametrisiert wird, welche dem erkannten Objekt zugeordnet wurden. Alternativ oder zusätzlich wird die Ermittlung der Hauptaxialrichtung in Abhängigkeit der Vielzahl von ermittelten dreidimensionalen Lagen von Reflexionspunkten durch ein angelerntes maschinelles Erkennungsverfahren erkannt, insbesondere durch ein neuronales Netz. Diese Weiterführung ermöglicht vorteilhafterweise eine effiziente Ermittlung beziehungsweise Abschätzung der Position und/oder der Orientierung des erkannten Objektes in der Umgebung des Fahrzeugs, beispielsweise zur Ermittlung einer prognostizierten Bewegung von dynamischen Objekten für Notbremsassistenten oder Fahrassistenzfunktionen.

In einer weiteren optionalen Weiterführung wird eine Bewegungsrichtung und/oder eine Geschwindigkeit des erkannten Objektes relativ zum Fahrzeug basierend auf den im zeitlichen Verlauf abgeschätzten Positionen des erkannten Objektes und/oder der im zeitlichen Verlauf abgeschätzten Orientierungen des erkannten Objektes und/oder der im zeitlichen Verlauf ermittelten dreidimensionalen Lagen von Reflexionspunkten ermittelt, welche dem Objekt zugeordnet wurden. Diese Weiterführung ermöglicht vorteilhafterweise eine Ermittlung einer prognostizierten Bewegung von dynamischen Objekten für Notbremsassistenten oder Fahrassistenzfunktionen.

Darüber hinaus kann es vorgesehen sein, dass eine Höhe des erkannten Objektes relativ zum Fahrzeug in Abhängigkeit der abgeschätzten Position des erkannten Objektes und/oder der abgeschätzten Orientierung des erkannten Objektes und/oder der Vielzahl von ermittelten dreidimensionalen Lagen von Reflexionspunkten ermittelt wird. In dieser Ausführung kann die Höhe zuverlässig und genau bestimmt werden.

In einer optionalen Ausführung wird ferner eine Kollisionswarnung zwischen dem Fahrzeug und dem erkannten Objekt bestimmt, wobei insbesondere die Abmaße des Fahrzeugs berücksichtigt werden. Die Bestimmung erfolgt wenigstens in Abhängigkeit der abgeschätzten aktuellen Position des erkannten Objektes. Alternativ oder zusätzlich erfolgt die Bestimmung der Kollisionswarnung in Abhängigkeit der abgeschätzten aktuellen Orientierung des erkannten Objektes. Alternativ oder zusätzlich erfolgt die Bestimmung der Kollisionswarnung in Abhängigkeit der ermittelten aktuellen Bewegungsrichtung des erkannten Objektes. Alternativ oder zusätzlich erfolgt die Bestimmung der Kollisionswarnung in Abhängigkeit der ermittelten aktuellen Geschwindigkeit des erkannten Objektes. Alternativ oder zusätzlich erfolgt die Bestimmung der Kollisionswarnung in Abhängigkeit der ermittelten Höhe des erkannten Objektes. Eine Türöffnungswarnung als Kollisionswarnung basiert zusätzlich auf dem Ausschwenkbereich der jeweiligen Tür des Fahrzeugs in die Umgebung. Diese Ausführung erzeugt eine effektive und zuverlässige Kollisionswarnung.

Ferner kann es insbesondere vorgesehen sein, dass die wenigstens drei erfassten Reflexionssignalen für die Ermittlung der dreidimensionalen Lage eines Reflexionspunktes aus den sechs erfassten Reflexionssignalen basierend auf wenigstens einer Eigenschaft der Reflexionssignale und/oder basierend auf einer Eigenschaft des Objektes, welches die Reflexion verursacht beziehungsweise an welchem die Reflexion stattfindet, verwendet beziehungsweise ausgewählt werden. Dabei können die Eigenschaften der Reflexionssignale miteinander oder mit einem Schwellenwert verglichen werden, beispielsweise werden eine Amplitudenhöhe des Reflexionssignals und/oder eine Anzahl an und/oder die Höhe und/oder die Breite von wenigstens einer Maximastelle des Reflexionssignals beziehungsweise eines Peaks des Reflexionssignals, welcher insbesondere oberhalb einer Amplitudenhöhe liegt, miteinander oder mit dem Schwellenwert verglichen. Des Weiteren können die wenigstens drei erfassten Reflexionssignalen für die Ermittlung der dreidimensionalen Lage eines Reflexionspunktes basierend einer Eigenschaft des Objektes, insbesondere der Art des Objektes und/oder der Höhe des Objektes, ausgewählt werden. Für Objekte mit einer Höhe kleiner einem Schwellenwert werden insbesondere die drei Reflexionssignale verwendet, welche von dem ausgesendeten Ultraschallsignal mit einer gegenüber dem Boden niedrigeren Raumrichtung (211, 221) ausgesendet wurde. Alternativ oder zusätzlich werden für unterschiedliche Objektarten die drei Reflexionssignale von dem Ultraschallsignal verwendet, welche genauere oder stärkere Reflexionssignale für die jeweilige Objektart liefern, beispielsweise werden basierend auf der Objektart die Reflexionssignale des Ultraschallsignals mit engerem oder breiterem Schallkegel und/oder die Reflexionssignale des Ultraschallsignals mit niedrigerer oder höherer Ultraschallfrequenz ausgewählt beziehungsweise verwendet. Die Objektart kann dabei in Abhängigkeit der Reflexionssignale und/oder kamerabasiert durchgeführt werden, insbesondere durch ein angelerntes maschinelles Erkennungsverfahren, insbesondere ein neuronales Netz. Für bestimmte oder alle Objektarten können Reflexionssignale von unterschiedlichen Ultraschallsignalen verwendet beziehungsweise ausgewählt werden, beispielsweise zwei Reflexionssignale pro Ultraschallsignal. Durch diese Ausführung wird die ermittelte Lage des Reflexionspunktes zuverlässiger und genauer ermittelt.

Die Erfindung betrifft auch ein Computerprogramm, umfassend Befehle, die bei der Ausführung des Programms durch einen Computer diesen veranlassen, die Schritte des erfindungsgemäßen Verfahrens auszuführen.

Die Erfindung betrifft des Weiteren eine Rechenvorrichtung, insbesondere ein Steuergerät, eine dezentrale beziehungsweise zonale oder zentrale Recheneinheit. Die Rechenvorrichtung umfasst mindestens einen Signaleingang zur Bereitstellung eines Eingangssignals. Das Eingangssignal repräsentiert wenigstens sechs durch den Ultraschallsensor erfasste Reflexionssignale, wobei die Reflexionssignale jeweils auf einem von dem Ultraschallsensor ausgesendeten Ultraschallsignal basieren, welches an einem Objekt in der Umgebung reflektiert wurde. Die Rechenvorrichtung umfasst auch eine Recheneinheit, insbesondere ein Prozessor, die so konfiguriert ist, dass sie die Schritte des erfindungsgemäßen Verfahrens ausführt. Des Weiteren weist die Rechenvorrichtung optional einen Signalausgang zur Erzeugung eines Ausgangssignals auf, wobei das Ausgangssignal insbesondere eine ermittelte dreidimensionalen Lage eines Reflexionspunktes des Objektes relativ zum Ultraschallsensor oder zum Fahrzeug und/oder eine Kollisionswarnung zu dem erkannten Objekt repräsentiert.

Die Erfindung betrifft ferner ein Fahrzeug, umfassend wenigstens eine erfindungsgemäße Rechenvorrichtung.

Weitere Vorteile ergeben sich aus der nachfolgenden Beschreibung von Ausführungsbeispielen mit Bezug zu den Figuren.
Figur 1a: Ultraschallsensor
Figur 1b: Ultraschallsensor am Fahrzeug
Figur 2: Fahrzeug mit Ultraschallsensor und erzeugtes Ultraschallsignal
Figur 3: Reflexionspunkte eines Objektes
Figur 4: Ablaufdiagramm des Verfahrens als Blockschaltbild

### Ausführungsbeispiele

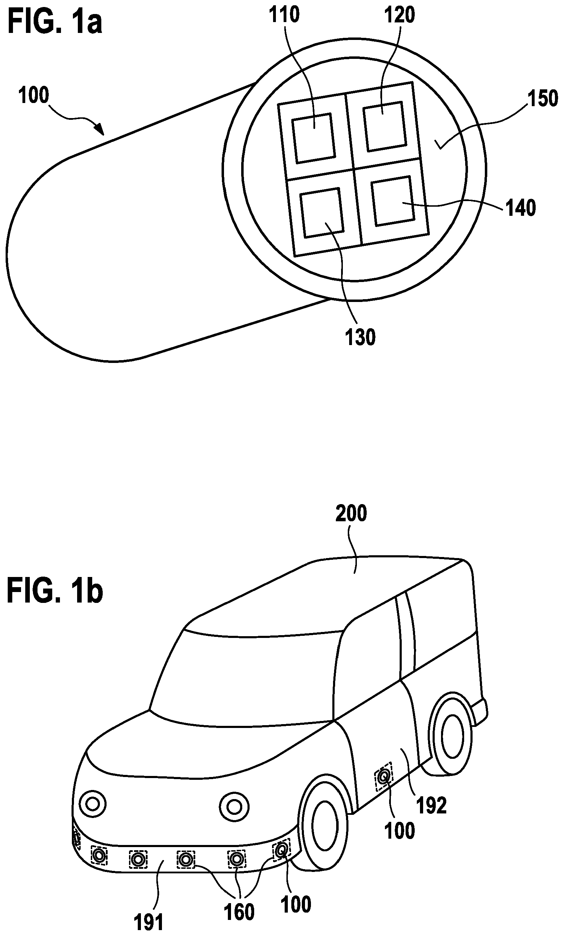

In Figur 1a ist ein Ultraschallsensor 100 schematisch dargestellt. Der Ultraschallsensor umfasst wenigstens drei Sensorelemente 110, 120, 130 und 140, wobei wenigstens zwei Sensorelemente zueinander horizontal und wenigstens zwei Sensorelemente zueinander vertikal versetzt angeordnet sind. Bevorzugt liegen die Sensorelemente 110, 120, 130 und 140 in einer gemeinsamen Ebene 150. Jedes der Sensorelemente 110 bis 140 umfasst vorzugsweise eine Sensormembran und einen Sensoraktorik, welche dazu eingerichtet ist, die Sensormembran zu Aussendung eines Ultraschallsignals auszulenken beziehungsweise in Schwingungen zu versetzen und empfangene Ultraschallsignale als Reflexionssignal an der Sensormembran zu erfassen. Die Sensoraktorik kann beispielsweise in MEMS-Technologie hergestellt sein.

In Figur 1b ist ein Fahrzeug 200 mit dem in Figur 1a gezeigten Ultraschallsensor 100 dargestellt. Der Ultraschallsensor 100 ist vorteilhafterweise an einem Stoßfänger 191 oder einer Seitentür 192 eines Fahrzeugs 200 angeordnet, wobei vorteilhafterweise wenigstens ein gestichelt dargestelltes Halteelement 160 zur Fixierung des Ultraschallsensors 100 am Fahrzeug 200 und zur Entkopplung mechanischer Schwingungen zwischen dem Ultraschallsensor 100 und dem Fahrzeug 200 vorgesehen ist. Es können dabei einer oder mehrere Ultraschallsensoren 100 am Stoßfänger 191 und/oder der Seitentür 192 angeordnet sein, insbesondere, wie hier dargestellt, sechs Ultraschallsensoren am Stoßfänger 191.

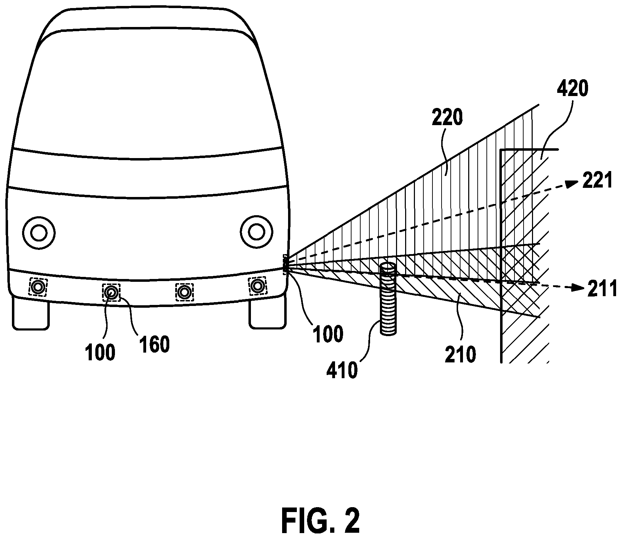

In Figur 2 ist das Fahrzeug 200 aus Figur 1b schematisch von vorne dargestellt, wobei der an einer Seite des Fahrzeugs 200 im Stoßfänger 191 angeordnete Ultraschallsensor 100 in Figur 2 ein erstes Ultraschallsignal 210 und ein zweites Ultraschallsignal 220 aussendet. Vorzugsweise können alle Ultraschallsensoren 100 unabhängig voneinander Ultraschallsignale aussenden und/oder empfangen. Das erste und zweite Ultraschallsignal 210, 220 unterscheiden sich, da die zwei Ultraschallsignale zeitlich nacheinander ausgesendet werden, und, da die zwei Ultraschallsignale in unterschiedliche Raumrichtungen und/oder mit jeweils unterschiedlich ausgeformten Schallkegeln und/oder mit jeweils unterschiedlichen Ultraschallfrequenzen ausgesendet werden. Im Ausführungsbeispiel aus Figur 2 werden die zwei Ultraschallsignale 210, 220 zumindest in unterschiedliche Raumrichtungen 211, 221 ausgesendet, wobei die Raumrichtungen zentrale Achsen der Ultraschallsignale repräsentieren, in welche sich die Ultraschallsignale ausbreiten.

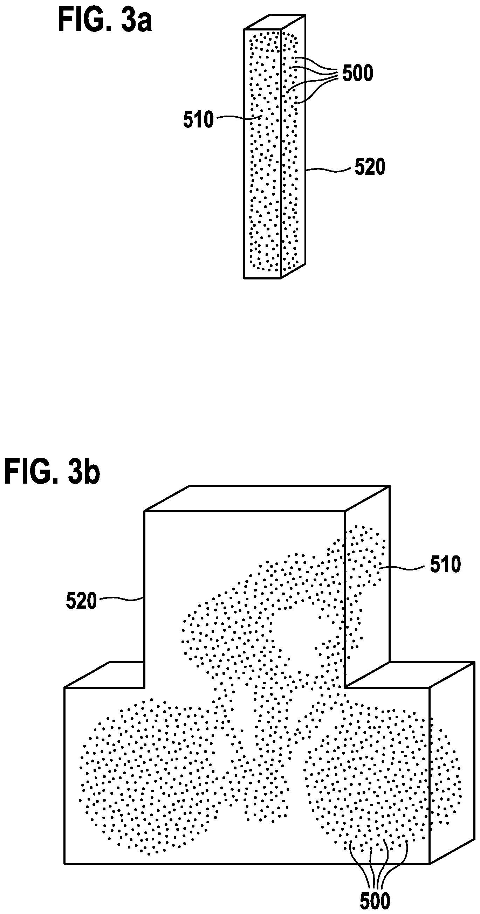

Basierend auf der erfassten beziehungsweise gemessenen Laufzeit T eines Ultraschallsignals von der Aussendung bis zur Erfassung an dem aussendenden Ultraschallsensor kann ein Abstand L eines Reflexionspunktes gemäß des einfachen Zusammenhangs L = 1/2 × T × C ermittelt werden, wobei die mittlere Schallgeschwindigkeit in Luft c ≈ 330 m/s beträgt. Bei einem ermittelten Abstand von 10cm oder 1 m beträgt die erfasste Laufzeit von der Aussendung des Ultraschallsignal bis zum Empfang beziehungsweise der Erfassung des Reflexionssignals also beispielsweise ca. 0,6 ms für 10 cm bzw. ca. 6 ms für 1 m. Es können folglich in einer Sekunde eine Vielzahl an Ultraschallsignalen ausgesendet und zugehörige Reflexionssignale empfangen sowie eine Vielzahl an Lagen von Reflexionspunkten in einer definierten Umgebung des Fahrzeugs ermittelt werden, siehe auch Figuren 3a und 3b. Grundsätzlich werden bei der Trilateration ermittelte Abstände bei unbekanntem Winkel (mit anderen Worten Abstandskreissegmente) verwendet, um einen Punkt, hier die Lage eines Reflexionspunktes, zu bestimmen. Entsprechende Bestimmungsgleichungen der Trilateration können der Literatur entnommen werden, wobei typischerweise drei ermittelte Abstände zur Bestimmung eins Lage eines Reflexionspunktes verwendet werden. Hier wird zu jedem ausgesendeten Ultraschallsignal eine Trilateration anhand der basierend auf den Reflexionssignalen zu diesem Ultraschallsignal ermittelten Abstände durchgeführt und eine Lage des zugehörigen Reflexionspunktes ermittelt. Da zwei unterschiedliche Ultraschallsignale ausgesendet werden, werden die zwei ermittelten Lagen der Reflexionspunkte kombiniert, beispielsweise miteinander verglichen beziehungsweise validiert und/oder gemittelt. Dadurch wird die Zuverlässigkeit der Messung erhöht. Des Weiteren können sowohl weitere entfernte als auch nahgelegene Objekte sowie Objekte in unterschiedlichen Höhen zuverlässig und zeitgleich erfasst sowie gegenüber dem Fahrzeug in der gleichen Umgebungsrichtung liegende unterschiedliche Objekte voneinander differenziert werden. Der hier betrachtete Ultraschall bezeichnet Schall mit Frequenzen oberhalb des Hörfrequenzbereichs des Menschen und umfasst Frequenzen ab 20 kHz bei Wellenlängen von 1,6 cm bis Frequenzen von ca. 10 GHz bei Wellenlängen von 0,033 µm in Luft. Luft weist eine stark mit der Frequenz steigende Dämpfung für Ultraschall auf.

In Figur 2 ist schematisch ein erstes Objekt 410 und ein weiter entferntes größeres, zweites Objekt 420 in der Umgebung des Fahrzeugs 200 dargestellt, wobei vorteilhafterweise für die Objekte 410 und 420 eine Vielzahl an Lagen von Reflexionspunkten 500 ermittelt wird.

In den Figur 3a und 3b sind schematisch jeweils eine Wolke 510 an ermittelten Reflexionspunkten 500 abgebildet. Zu der in Figur 3a dargestellten Wolke 510 beziehungsweise zu der Vielzahl an ermittelten Lagen von Reflexionspunkten 500 kann beispielsweise mittels eines neuronalen Netzes eine Form und Parametrisierung einer Objektbox 520 bestimmt werden. Basierend auf dieser bestimmten Form und Parametrisierung der Objektbox 520 kann gemäß den Lagen der Reflexionspunkten aus Figur 3a ein Pfosten als Objekt erkannt werden. Zu den in Figur 3b ermittelten Lagen von Reflexionspunkten 500 können beispielsweise mittels eines neuronalen Netzes eine andere Form und Parametrisierung einer anderen Objektbox 520 bestimmt werden, wobei basierend auf dieser Objektbox 520, welche die Lagen der Reflexionspunkte 500 repräsentiert, ein Fahrrad beziehungsweise Zweirad als dynamisches Objekt erkannt wird. Für die Abstandserfassung bei Fahrzeugen relevante Objekte sind beispielsweise ein Pfosten, ein Bordstein oder eine Leitplanke als statische Objekte sowie ein Fremdfahrzeug, ein Fußgänger oder ein Fahrrad als dynamische Objekte.

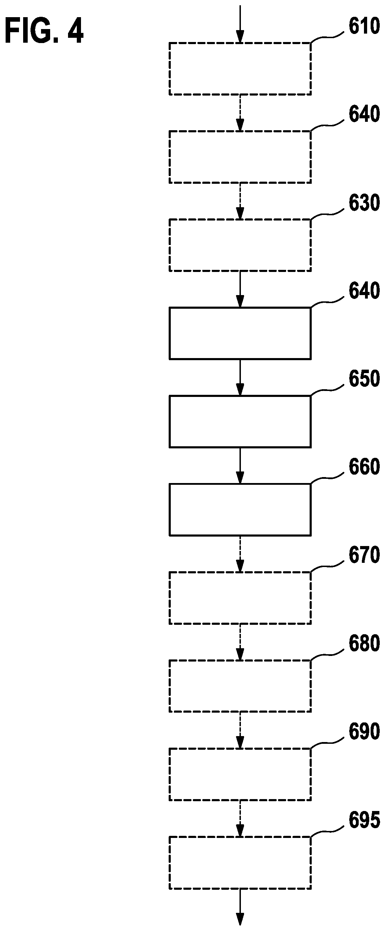

In Figur 4 ist ein Ablaufdiagramm des Verfahrens zur Ermittlung einer dreidimensionalen Lage eines Reflexionspunktes eines Objektes in der Umgebung eines Fahrzeugs mittels eines Ultraschallsensors als Blockschaltbild schematisch dargestellt. Es kann zunächst im optionalen Schritt 610 vorgesehen sein, dass eine Geschwindigkeit des Fahrzeugs erfasst wird. In einem weiteren optionalen Schritt 620 des Verfahrens kann eine Fahrsituation des Fahrzeugs in Abhängigkeit einer Position des Fahrzeugs, in Abhängigkeit der erfassten Geschwindigkeit des Fahrzeugs, in Abhängigkeit einer Eingabe des Nutzers des Fahrzeugs und/oder in Abhängigkeit eines erfassten Kamerabildes von der Umgebung des Fahrzeugs erfasst beziehungsweise erkannt werden. In einem anderen optionalen Schritt 630 wird eine Änderung eines zeitlichen Abstandes zwischen auszusendeten Ultraschallsignalen in Abhängigkeit der erfassten Geschwindigkeit angepasst, wobei der zeitliche Abstand zwischen den ausgesendeten Ultraschallsignalen insbesondere mit zunehmender Geschwindigkeit reduziert wird. Das erfindungsgemäße Verfahren umfasst eine Aussendung 640 mindestens zweier Ultraschallsignale mittels wenigstens eines der Ultraschallsensorelemente des Ultraschallsensors, wobei die zwei Ultraschallsignale zeitlich nacheinander ausgesendet werden. Zwischen den Ultraschallsignalen liegt vorzugsweise der zeitliche Abstand vor. Es kann optional vorgesehen sein, dass die Aussendung 640 der mindestens zwei Ultraschallsignale mittels unterschiedlicher Sensorelemente beziehungsweise Ultraschallsensorelemente des Ultraschallsensors erfolgt. Des Weiteren kann die Aussendung 640 wenigstens eines der Ultraschallsignale optional mittels mindestens zwei gleichzeitig aktivierter unterschiedlicher Sensorelemente des Ultraschallsensors erfolgen. Die zwei Ultraschallsignale werden im Schritt 640 des Weiteren in unterschiedliche Raumrichtungen und/oder mit jeweils unterschiedlich ausgeformten Schallkegeln und/oder mit jeweils unterschiedlichen Ultraschallfrequenzen ausgesendet. Optional erfolgt die Aussendung 640 der mindestens zwei Ultraschallsignale in Abhängigkeit der im Schritt 620 erkannten Fahrsituation, insbesondere wenn als Fahrsituation eine Manöversituation, ein Einparkvorgang oder ein Ausparkvorgang erkannt wurde. Es kann optional vorgesehen sein, dass im Schritt 640 wenigstens eines der Ultraschallsignale in Abhängigkeit der im Schritt 610 erfassten Geschwindigkeit ausgesendeten wird, wobei die ausgesendete Raumrichtung, die Formung des ausgesendeten Schallkegels und/oder die ausgesendete Ultraschallfrequenz des Ultraschallsignals in Abhängigkeit der Geschwindigkeit verändert wird. Das ausgesendete Ultraschallsignal weist im Stillstand des Fahrzeugs insbesondere einen in Horizontalrichtung breiteren Schallkegel auf als während der Fahrt des Fahrzeugs. Danach werden im Schritt 650 die zwei ausgesendeten und jeweils an einem Objekt reflektierten Ultraschallsignale als Reflexionssignale jeweils mittels der wenigstens drei Sensorelemente 110, 120, 130 des Ultraschallsensors 100 erfasst beziehungsweise empfangen. Anschließend wird im Schritt 660 die dreidimensionale Lage eines Reflexionspunktes des Objektes relativ zum Ultraschallsensor 100 oder zum Fahrzeug 200 basierend auf den wenigstens drei erfassten Reflexionssignalen ermittelt, vorzugsweise wird die dreidimensionale Lage des Reflexionspunktes des Objektes relativ zum Ultraschallsensor 100 oder zum Fahrzeug 200 basierend auf den wenigstens sechs erfassten Reflexionssignalen ermittelt. Es kann vorgesehen sein, die zur Ermittlung 660 der dreidimensionalen Lage berücksichtigten Reflexionssignale aus den sechs erfassten Reflexionssignalen auszuwählen, wobei die Auswahl insbesondere in Abhängigkeit einer Eigenschaft des Reflexionssignals und/oder in Abhängigkeit einer Eigenschaft des Objektes erfolgt, an welchem die Reflexionssignale reflektiert wurden. Das Objekt kann anhand der Reflexionssignale und/oder kamerabasiert erkannt werden, insbesondere durch ein angelerntes maschinelles Erkennungsverfahren, insbesondere ein neuronales Netz. In einer Weiterführung des Verfahrens wird in einem optionalen Schritt 670 ein Objekt in der Umgebung des Fahrzeugs in Abhängigkeit einer Vielzahl von ermittelten dreidimensionalen Lagen von jeweils unterschiedlichen Reflexionspunkten durch ein angelerntes maschinelles Erkennungsverfahren erkannt, insbesondere durch ein neuronales Netz, wobei den ermittelten dreidimensionalen Lagen der jeweils unterschiedlichen Reflexionspunkte vorteilhafterweise das erkannte Objekt zugeordnet wird. Es kann anschließend vorgesehen sein, dass im optionalen Schritt 680 eine Position und/oder eine Orientierung des erkannten Objektes in der Umgebung des Fahrzeugs abgeschätzt werden, insbesondere jeweils relativ zum Fahrzeug. Diese Abschätzung 680 der Position und/oder der Orientierung des erkannten Objektes erfolgt vorzugsweise in Abhängigkeit einer Hauptaxialrichtung, wobei die Hauptaxialrichtung in Abhängigkeit der ermittelten dreidimensionalen Lagen der dem Objekt zugeordneten Reflexionspunkte ermittelt wird. Die Ermittlung der Hauptaxialrichtung wird insbesondere in Abhängigkeit des kleinsten mittleren Abstands der dem Objekt zugeordneten Reflexionspunkte zur Achse durchgeführt. Alternativ oder zusätzlich wird die Position und/oder der Orientierung des erkannten Objektes im Schritt 680 in Abhängigkeit einer Lage einer dreidimensionalen Objektbox um das erkannte Objekt abgeschätzt, wobei die Form der Objektbox insbesondere aus einem Speicher basierend auf dem erkannten Objekt geladen und in Abhängigkeit der ermittelten dreidimensionalen Lagen der Reflexionspunkte parametrisiert wird, welche dem erkannten Objekt zugeordnet wurden. Alternativ oder zusätzlich wird die Position und/oder der Orientierung des erkannten Objektes im Schritt 680 in Abhängigkeit der Vielzahl von ermittelten dreidimensionalen Lagen von Reflexionspunkten durch ein angelerntes maschinelles Erkennungsverfahren abgeschätzt, insbesondere durch ein neuronales Netz. Es kann des Weiteren vorgesehen sein, dass im nicht dargestellten optionalen Schritt 685 eine Ermittlung einer Bewegungsrichtung und/oder einer Geschwindigkeit des erkannten Objektes relativ zum Fahrzeug basierend auf den im zeitlichen Verlauf abgeschätzten Positionen des erkannten Objektes und/oder der im zeitlichen Verlauf abgeschätzten Orientierungen des erkannten Objektes und/oder der im zeitlichen Verlauf ermittelten dreidimensionalen Lagen von Reflexionspunkten, welche dem Objekt zugeordnet wurden, durchgeführt wird. Darüber hinaus wird im optionalen Schritt 690 eine Höhe des erkannten Objektes relativ zum Fahrzeug in Abhängigkeit der abgeschätzten Position des erkannten Objektes und/oder der abgeschätzten Orientierung des erkannten Objektes und/oder der Vielzahl von ermittelten dreidimensionalen Lagen von Reflexionspunkten ermittelt. In einem weiteren optionalen Schritt 695 wird eine Bestimmung einer Kollisionswarnung zwischen dem Fahrzeug und dem erkannten Objekt durchgeführt, wobei insbesondere die Abmaße des Fahrzeugs berücksichtigt werden. Die Bestimmung 695 der Kollisionswarnung erfolgt dabei wenigstens in Abhängigkeit der abgeschätzten aktuellen Position des erkannten Objektes, und/oder der abgeschätzten aktuellen Orientierung des erkannten Objektes, und/oder der ermittelten aktuellen Bewegungsrichtung des erkannten Objektes, und/oder der ermittelten aktuellen Geschwindigkeit des erkannten Objektes, und/oder der ermittelten Höhe des erkannten Objektes erfolgt, wobei eine Türöffnungswarnung als Kollisionswarnung zusätzlich auf dem Ausschwenkbereich der jeweiligen Tür des Fahrzeugs in die Umgebung basiert. Die im Schritt 695 bestimmte Kollisionswarnung wird bei einer drohenden Kollision vorzugsweise dem Nutzer des Fahrzeugs angezeigt.

## Patentansprüche

1. Verfahren zur Ermittlung einer dreidimensionalen Lage eines Reflexionspunktes (500) eines Objektes in der Umgebung eines Fahrzeugs (200) mittels eines Ultraschallsensors (100), welcher wenigstens drei Sensorelemente (110 bis 140) aufweist, wobei wenigstens zwei Sensorelemente zueinander horizontal und wenigstens zwei Sensorelemente zueinander vertikal versetzt angeordnet sind, wobei das Verfahren folgende Schritte umfasst
• Aussendung (640) mindestens zweier Ultraschallsignale mittels wenigstens eines der Sensorelemente (110 bis 140) des Ultraschallsensors (100), wobei die zwei Ultraschallsignale zeitlich nacheinander ausgesendet werden, und, wobei die zwei Ultraschallsignale in unterschiedliche Raumrichtungen (211, 221) und/oder mit jeweils unterschiedlich ausgeformten Schallkegeln und/oder mit jeweils unterschiedlichen Ultraschallfrequenzen ausgesendet werden, und
• Erfassung (650) der zwei ausgesendeten und an einem Objekt reflektierten Ultraschallsignale als Reflexionssignale jeweils mittels der wenigstens drei Ultraschallsensorelemente, und
• Ermittlung (660) der dreidimensionalen Lage eines Reflexionspunktes (500) des Objektes relativ zum Ultraschallsensor (100) oder zum Fahrzeug (200) basierend auf wenigstens drei erfassten Reflexionssignalen, wobei die drei berücksichtigten Reflexionssignale von einem oder beiden der zwei ausgesendeten Ultraschallsignale stammen,
**dadurch gekennzeichnet, dass** folgender Schritt durchgeführt wird
• Erkennung (670) eines Objektes in der Umgebung des Fahrzeugs (200) in Abhängigkeit einer Vielzahl von ermittelten dreidimensionalen Lagen von jeweils unterschiedlichen Reflexionspunkten (500) durch ein angelerntes maschinelles Erkennungsverfahren, insbesondere durch ein neuronales Netz, wobei den ermittelten dreidimensionalen Lagen der jeweils unterschiedlichen Reflexionspunkte (500) vorteilhafterweise das erkannte Objekt zugeordnet wird.

2. Verfahren nach Anspruch 1, wobei zusätzlich folgender Schritt durchgeführt wird
• Abschätzung (680) einer Position und/oder einer Orientierung des erkannten Objektes in der Umgebung des Fahrzeugs (200), insbesondere jeweils relativ zum Fahrzeug (200),
i. in Abhängigkeit einer Hauptaxialrichtung, wobei die Hauptaxialrichtung in Abhängigkeit der ermittelten dreidimensionalen Lagen der dem Objekt zugeordneten Reflexionspunkte (500) ermittelt wird, wobei die Ermittlung der Hauptaxialrichtung insbesondere in Abhängigkeit des kleinsten mittleren Abstands der dem Objekt zugeordneten Reflexionspunkte (500) zur Achse erfolgt, und/oder
ii. in Abhängigkeit einer Lage einer dreidimensionalen Objektbox (520) um das erkannte Objekt, wobei die Form der Objektbox (520) insbesondere aus einem Speicher basierend auf dem erkannten Objekt geladen und in Abhängigkeit der ermittelten dreidimensionalen Lagen der Reflexionspunkte (500) parametrisiert wird, welche dem erkannten Objekt zugeordnet wurden, und/oder
iii. in Abhängigkeit der Vielzahl von ermittelten dreidimensionalen Lagen von Reflexionspunkten (500) durch ein angelerntes maschinelles Erkennungsverfahren, insbesondere durch ein neuronales Netz.

3. Verfahren nach Anspruch 2, wobei zusätzlich folgender Schritt durchgeführt wird
• Ermittlung (685) einer Bewegungsrichtung und/oder einer Geschwindigkeit des erkannten Objektes relativ zum Fahrzeug basierend auf den im zeitlichen Verlauf abgeschätzten Positionen des erkannten Objektes und/oder der im zeitlichen Verlauf abgeschätzten Orientierungen des erkannten Objektes und/oder der im zeitlichen Verlauf ermittelten dreidimensionalen Lagen von Reflexionspunkten, welche dem Objekt zugeordnet wurden.

4. Verfahren nach einem der Ansprüche 1 bis 3, wobei zusätzlich folgender Schritt durchgeführt wird
• Ermittlung (690) einer Höhe des erkannten Objektes relativ zum Fahrzeug in Abhängigkeit der abgeschätzten Position des erkannten Objektes und/oder der abgeschätzten Orientierung des erkannten Objektes und/oder der Vielzahl von ermittelten dreidimensionalen Lagen von Reflexionspunkten (500).

5. Verfahren nach einem der Ansprüche 2 bis 4 wobei zusätzlich folgender Schritt durchgeführt wird
• Bestimmung (695) einer Kollisionswarnung zwischen dem Fahrzeug und dem erkannten Objekt, wobei insbesondere die Abmaße des Fahrzeugs berücksichtigt werden, wobei die Bestimmung wenigstens in Abhängigkeit
i. der abgeschätzten aktuellen Position des erkannten Objektes, und/oder
ii. der abgeschätzten aktuellen Orientierung des erkannten Objektes, und/oder
iii. der ermittelten aktuellen Bewegungsrichtung des erkannten Objektes, und/oder
iv. der ermittelten aktuellen Geschwindigkeit des erkannten Objektes, und/oder
v. der ermittelten Höhe des erkannten Objektes erfolgt, und
wobei insbesondere eine Türöffnungswarnung als Kollisionswarnung zusätzlich auf dem Ausschwenkbereich der jeweiligen Tür des Fahrzeugs in die Umgebung basiert.

6. Verfahren nach einem der vorhergehenden Ansprüche, wobei die drei erfassten Reflexionssignalen für die Ermittlung (660) der dreidimensionalen Lage eines Reflexionspunktes (500) basierend auf wenigstens einer Eigenschaft der Reflexionssignale und/oder einer Eigenschaft des Objektes ausgewählt werden.

7. Computerprogramm, umfassend Befehle, die bei der Ausführung des Programms durch einen Computer diesen veranlassen, die Schritte des Verfahrens nach einem der vorhergehenden Ansprüche auszuführen.

8. Rechenvorrichtung, insbesondere Steuergerät, zonale oder zentrale Recheneinheit, umfassend mindestens folgende Komponenten
• einen Signaleingang zur Bereitstellung eines Eingangssignals, welches zu wenigstens zwei von einem Ultraschallsensor ausgesendeten Ultraschallsignalen und an einem Objekt reflektierte durch den Ultraschallsensor erfasste Reflexionssignale repräsentiert, und
• eine Recheneinheit, insbesondere ein Prozessor, die so konfiguriert ist, dass sie die Schritte des Verfahrens nach einem der Ansprüche 1 bis 6 ausführt, und
• optional einen Signalausgang zur Erzeugung eines Ausgangssignals, welches eine ermittelte dreidimensionalen Lage eines Reflexionspunktes (500) des Objektes relativ zum Ultraschallsensor (100) oder zum Fahrzeug (200) und/oder eine Kollisionswarnung zu dem erkannten Objekt repräsentiert.

9. Fahrzeug (200), umfassend wenigstens eine Rechenvorrichtung nach Anspruch 8.
